(19) Europäisches Patentamt
European Patent Office
Office européen des brevets

(11) Publication number: **0 488 388 A2**

# (12) EUROPEAN PATENT APPLICATION

(21) Application number: **91120565.6**

(51) Int. Cl.5: **G11B 23/00**

(22) Date of filing: **29.11.91**

(30) Priority: **30.11.90 JP 130677/90**

(43) Date of publication of application:
**03.06.92 Bulletin 92/23**

(84) Designated Contracting States:
**AT DE FR GB IT NL**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **Todo, Akira, c/o Mitsui Petrochemical Ind., Ltd.**
**1-2, Waki 6-chome, Waki-cho**
**Kuga-gun, Yamaguchi 740(JP)**
Inventor: **Kurisu, Masayoshi**
**580-32 Aza-Taku 2-gou, Nagaura**
**Sodegaura-shi, Chiba 299-02(JP)**
Inventor: **Fujii, Shigeharu**
**580-32 Aza-Taku 2-gou, Nagaura**
**Sodegaura-shi, Chiba 299-02(JP)**
Inventor: **Okubo, Atsushi**
**580-32 Aza-Taku 2-gou, Nagaura**
**Sodegaura-shi, Chiba 299-02(JP)**
Inventor: **Mizumoto, Kunihiko, c/o Mitsui Petrochem. Ind.Ltd.**
**1-2, Waki 6-chome, Waki-cho**
**Kuga-gun, Yamaguchi 740(JP)**

(74) Representative: **Füchsle, Klaus, Dipl.-Ing. et al**
**Hoffmann . Eitle & Partner Patentanwälte**
**Arabellastrasse 4**
**W-8000 München 81(DE)**

## (54) Hub for optical disk and optical disk.

(57) The present invention relates to hubs (67) for optical disks (61) in which a lubricant layer is formed on or in the vicinity of an opening edge (100) into which a spindle (93) of the optical disk driving device (91) is inserted, and optical disks (61) in which the above-mentioned hubs (67) are used. By using the optical disks (61) provided with such hubs (67) as mentioned above, sliding properties between the spindle (93) of the disk drive (91) and the center hole (100) of the hub (67) are markedly improved, and excellent loading performance of the optical disk (61) is accomplished.

EP 0 488 388 A2

Fig. 5

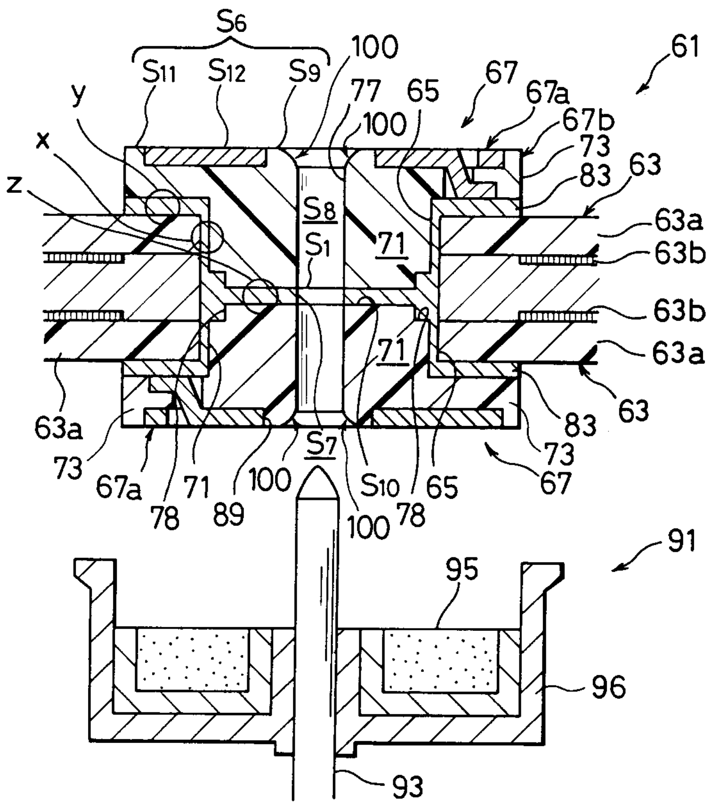
S6
S11
S12
S9
100
77
65
67
67a
67b
73
83
63
61
63a
63b
y
x
z
S8
S1
71
63a
73
67a
78
71
89
100
S7
S10
65
78
100
83
63
67
91
95
96
93

## FIELD OF THE INVENTION

This invention relates to hubs for optical disk and optical disks having said hubs, and more particularly the invention relates to hubs for optical disk and optical disks having said hubs, both of them being so designed that when a spindle of the optical disk driving device is fitted into the hub of the optical disk, excellent lubricating properties or slipping properties can be exhibited between the spindle and a center hole of the hub, and no poor loading performance is produced.

## BACKGROUND OF THE INVENTION

Because of their characteristics such as large memory capacity and portability, optical disks have a future possibility of being used in a great variety of applications, and in recent years extensive researches and developments of the optical disks have been conducted.

Optical disks which have been made fit for practical use include those of read-only type such as a compact disk (CD) and CD-ROM, and those of the write-once type capable of storing information but incapable of erasing the stored information. Further, practical use of the rewritable optical disks is begun.

Such optical disks as mentioned above are usually held rotatably in a thin flat case, and are often used as optical disk cartridges.

When this optical disk cartridge is set on a carriage of a recording and reproducing equipment, a spindle of a disk drive is fitted with a hub of the optical disk. In this case, the spindle is so designed that it is inserted into a center hole of the hub.

Thereafter, the surface of the optical disk exposed through the cartridge is irradiated with a laser beam, whereby information is recorded in the disk or the recorded information is reproduced therefrom.

In such cases, however, the spindle sometimes cannot be inserted smoothly into the center hole of the hub, or frictional force produced between the surface of the spindle and the inner peripheral surface of the center hole of the hub becomes large. As the result, the spindle is damaged sometimes when the center hole of the hub is made of a metal, or when the center hole of the hub is made of a resin, lubricating properties between the spindle and the center hole of the hub become poor depending on the kind of resin used, whereby a poor loading performance is sometimes produced.

## OBJECT OF THE INVENTION

The present invention has been made in view of the circumstances as mentioned above, and an object of the invention is to provide hubs for optical disk and optical disks having said hubs, both of them being so designed that when a spindle of the optical disk driving device is fitted into the hub of the optical disk, improved sliding properties or slipping properties can be exhibited between the spindle and a center hole of the hub, whereby an excellent loading performance is exhibited.

## SUMMARY OF THE INVENTION

The hubs for optical disk of the present invention having a center hole into which a spindle of an optical disk driving device is inserted, are characterized in that a lubricant layer is provided in an opening edge of the center hole of the hub or in the vicinity of said opening edge.

The optical disks of the present invention are characterized in that said disks are provided with a hub having a center hole into which a spindle of an optical disk driving device is inserted, said hub being provided with a lubricant layer in an opening edge of said center hole of the hub or in the vicinity of said opening edge.

The lubricant layer used in the hub of the optical disk includes suitably those formed from lubricants, preferably from silicone oil, silicone grease or silicone oil compound, and preferably having a thickness of from 1 to 50,000 Å.

In the present invention, the lubricant layer is provided in the opening edge of the center hole of the hub or in the vicinity of said opening edge, for example, by applying the lubricant thereto, hence sliding properties or slipping characteristics are improved at the time when the spindle is inserted into the center hole of the hub, thereby preventing the spindle or hub from its damage.

It has been found by an experiment 20,000 times on loading an upright drive with the optical disk of the invention that the sliding properties between the spindle and the center hole of the hub was excellent and no spin-up troubles occurred.

## BRIEF DESCRIPTION OF THE DRAWINGS

Fig. 1 is a sectional view of one embodiment of the optical disk of the present invention.

Fig. 2 is a sectional view of one embodiment of the optical disk of the invention.

Fig. 3 is a perspective view of one embodiment of the hub viewed from the bottom, said hub is used in one embodiment of the optical disk of the present invention.

Fig. 4 is a perspective view of the hub viewed from the top, said hub is used in one embodiment of the optical disk of the invention.

Fig. 5 is an enlarged sectional view of essential parts of a preferred embodiment of the first optical disk of the invention and an optical disk driving device, said sectional view showing the state wherein the optical disk is about to be fitted on the driving device.

Fig. 6 is a sectional view of the third embodiment of an optical disk of the invention, said optical disk being a laminated optical disk which has no such a concave portion as in the optical disk of Fig. 1 provided for fitting an annular metallic member to the outward edge face of the hub.

Fig. 7 is a sectional view of an optical disk of an air-sandwich structure, said optical disk having no such a concave portion as in the optical disk of Fig. 2 provided for fitting an annular metallic member to the outward edge face of the hub.

Fig. 8 is to show sectional view of an optical disk of one embodiment of the invention, a disk cartridge and a disk drive, respectively, and an enlarged longitudinal sectional view of a chamfered (broken) opening edge of the center hole of the hub for inserting the spindle therethrough.

Fig. 9 is a front view of the optical disk cartridge shown in Fig. 8.

Fig. 10 is to show sectional views of various opening edges of the center hole of resinous hubs used in the optical disk of the invention.

Fig. 11 is to show sectional views of various opening edges of the center hole of metallic hubs used in the optical disk of the invention.

Fig. 12 is a sectional view of an insert hub having metallic ring formed in the center thereof.

Fig. 13 is s sectional view of a single-plate optical disk of one embodiment of the invention.

Fig. 14 is a sectional view of a single-plate optical disk of one embodiment of the invention.

67 ... Hub, 77 ... Center hole, 100 ... Opening edge, 53,93 ... Spindle, 61,21 ... Optical disk

## DETAILED DESCRIPTION OF THE INVENTION

The present invention is illustrated below with reference to embodiments given in terms of their respective drawings attached hereto.

Figs. 1 and 2 are to show individually a sectional view of one embodiment of optical disk of the present invention.

Fig. 1 shows a laminated type optical disk provided with a concave portion 81 in which an annular metallic member 67a is engaged with an outward end face s6 of the hub, and Fig. 2 shows an air-sandwich type optical disk provided with the same concave portion 81 as in the optical disk of Fig. 1.

The laminated type optical disk of the first embodiment of the invention as shown in Fig. 1 is illustrated below in detail.

In this connection, Fig. 3 is a perspective view showing the hub used in the optical disk of the first embodiment shown in Fig. 1 when viewed from the bottom, and Fig. 4 is a perspective view of said hub when viewed from top.

Fig. 5 is an enlarged sectional view of essential parts of the optical disk of one embodiment of the invention when said optical disk is about to be fitted on an optical disk driving device.

Fig. 6 is a sectional view of one embodiment of the optical disk of the invention, said optical disk being a laminated type optical disk which has no such a concave portion 81 as in the optical disk of Fig. 1 provided for fitting an annular metallic member 67a to the outward end face s6 of the hub, and Fig. 7 shows an air-sandwich type optical disk which has no such a concave portion 81 provided on the outward end face of the hub as in the optical disk of Fig. 2.

As shown in Fig. 1, the optical disk 61 of the first embodiment of the invention is an laminated type optical disk comprising two pieces of disk substrates 63 each having a recording medium layer 63b on one side thereof, said disk substrates 63 being laminated together so that said recording medium layers is positioned between said disk substrates 63, and two pieces of hubs 67 fitted individually in center openings 65 of said disk substrates 63 through both sides thereof.

### Disk substrate

The disk substrates 63 comprises a resin substrate 63a and a recording medium layer 63b laminated on one (inner) side of said disk substrate 63. In this embodiment of the invention, the disk substrates 63 both respectively have the recording medium layers 63b thereon, but the recording medium layer 63b may be formed only on one of the disk substrates 63.

The resin substrate 63a may be formed from any resinous materials known hitherto, for example, resins commonly used as substrate materials such as polymethyl methacrylate and polycarbonate, and random copolymers of ethylene with cycloolefins such as tetracyclododecene, methylcyclotetradodecene and norbornene.

Desirable materials for the substrate used in the present invention are resins having an intrinsic viscosity [$\eta$] of 0.05 - 10 dl/g, such as (a) cycloolefin random copolymers of ethylene and a cycloolefin represented by the following formula [1] and (b) polyolefins comprising polyolefins formed by ring opening polymerization of the cycloolefin represented by the following formula [1] or hydrogenation products of the polyolefins.

General formula [1]

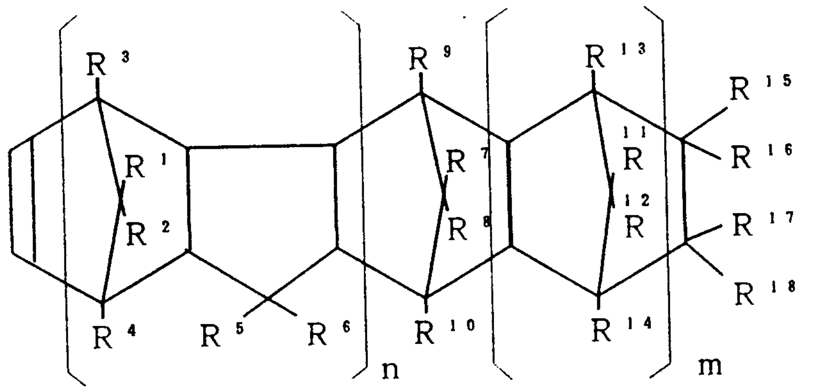

··· [ 1 ]

wherein n is 0 (zero) or 1, m is 0 (zero) or a positive integer, $R^1$ - $R^{18}$ are individually hydrogen, halogen or hydrocarbon group. $R^{15}$ - $R^{18}$ may, linking together, form a mono- or polycyclic, and $R^{15}$ with $R^{16}$ or $R^{17}$ with $R^{18}$ may form a divalent hydrocarbon group. The mono- or polycyclic composed of $R^{15}$ - $R^{18}$ may have double bond.

The recording medium layer 63b comprises a recording material layer or, if necessary, a laminate including one or two or more layers selected from among a protective layer comprising inorganic or organic materials (e.g. SiNx, ultraviolet curing resin, etc.), enhancing layer, reflecting layer, good heat conductive layer (e.g. Al alloy), interference layer and reflection preventing layer, which are laminated on the recording material layer and/or on the reverse of said recording material layer, or alternatively the recording medium layer 63 preferably comprises the recording material layer laminated with the protective layer comprising the organic material (e.g. ultraviolet curing resin) or the inorganic material as the outermost layer. Particularly, it is preferable that on the substrate 63a is laminated the recording medium layer 63b comprising a SiN protective layer/recording material layer/SiN protective layer/Al alloy layer/ultraviolet curing resin layer in this order. The recording material layer may be formed from any materials so long as they are optical recording materials, including those used exclusively for replay such as a compact disk (CD) and CD-ROM, for those of the write-once type capable of storing information but incapable of erasing stored information or those for the rewritable type. In addition, there may be mentioned, for example, magnetooptical recording materials containing a 3d transition metal and rare-earth elements such as Tb Fe Co or containing 3d transition metal, rare-earth metal and corrosion resistant metal such as Tb Fe Co plus Pt or Pd; organic coloring materials such as cyanine and naphthalocyanine dyes; low melting metallic materials such as Te, Te-C-H and Te-Cr-C-H; or disk substrates having formed thereon pits corresponding to signals. Of these recording material layers mentioned above, particularly preferred are magnetooptical recording material layers.

The disk substrates 63 are bonded together by means of an adhesive layer 68c as shown in Fig. 1 (or Fig. 6), or joined together through an outer peripheral spacer 68a and an inner peripheral spacer 68b by means of an adhesive or ultrasonic welding (air-sandwich type) as shown in Fig. 2 (or Fig. 7).

In the present invention, an adhesive for bonding the disk substrates and the hubs includes, a

thermosetting adhesive such as amino resin, phenol resin, resorcinol resin, xylene resin, furan resin, epoxy resin, polyisocyanate, unsaturated polyester and acrylic resin; a thermoplastic adhesive such as vinyl acetate type, acrylic type, ethylene copolymer type, polyamide, polyester and polyurethane; a rubber type adhesive such as polychloroprene, nitrile rubber, reclaimed rubber, SBR type and natural rubber; and a pressure-sensitive adhesive such as rubber type, acrylic type, emulsion type, oligomer type, hot-melt type, thermosetting type and hygroscopic setting type; a hot-melt adhesive such as water soluble type, reaction type, high-temperature type and pressure-sentitive type; an instantaneous adhesive such as cyanoacrylic type. The disk substrates and the hubs may be bonded by ultrasonic welding or high-frequency welding. As preferred materials, there is exemplified a UV-curing adhesive such as acrylic type and epoxy type.

Further, as an adhesive for bonding both of substrates or both of hubs, the adhesives mentioned above may be used and water solble type, reaction type, high-temperature type and the pressure-sensitive type of the hot-melt adhesives are particularly preferred. From among the hot-melt adhesives, those having at least 130 ° C, particularly at least 140 ° C of a softening point are preferred. As the hot-melt adhesive, there may be exemplified those having the following composition.

| | |
|---|---|
| $\alpha$-olefin polymer | 1 - 60 % by weight (e.g. ethylene-propylene copolymer, polypropylene and polyisobutylene) |
| Styrene type polymer | 1 - 30 % by weight |
| Tackifier | 30 - 95 % by weight (e.g. aliphatic cyclic resin having 300 - 5000 of number average-molecular weight) |

Hub

The hub 67 which is fitted in the central opening 65 of the disk substrate 63 usually comprises a resin body 67b having a column-like portion 71 and a flange portion 73 extended outward from an edge of said column-like portion 71.

The column-like portion 71 has a center hole 77 penetrating therethrough up to both end faces s6 and s7 of said column-like portion 71, and a spindle 93 of a driving device 91 shown in Fig. 5 as will be mentioned later is inserted into the center hole 77.

In the optical disk of the embodiment of the present invention as shown in Fig. 1, the resin body 67b which is a part of the hub 67 has an annular groove 78 along the circumference of the end face s7 of the column-like portion 71, and an annular metallic member (metallic plate) 67a embedded in the end face s6 of the column-like portion 71 having the flange portion 73 (see Fig. 4). The metallic member 67a is arranged so that the center hole 77 is positioned concentrically within a central opening 89 of said metallic member 67a.

The central opening 89 of the metallic member 67a is larger in radius than the center hole 77 of the resin body 67b, and there is a given distance between an inner edge end of the central opening 89 and an inner peripheral portion s8 of the center hole 77.

Accordingly, in the column-like portion 71 of the resin body 67b, the circumferential portions s9 and s10 and the inner peripheral portion s8 are all made of resin. The metallic member 67a has an exposed face s12 between the circumferential portion s9 and the outer circumferential portion s11 in the outward end face s6 of the hub 67 comprising the flange portion 73 and the column-like portion 71.

Materials used for preparing the resin body 67b are not limited particularly and may be any resins conventionally used for hubs of optical disks. Concretely, there may be used such materials as used in the aforementioned resin substrate 63a, for example, polycarbonate, acrylic resin, polyolefin, etc. Of these materials mentioned above, particularly preferred is polycarbonate.

Materials used for preparing the metallic member (metallic plate) 67a may be any metals so long as they are attracted by magnets, particularly ferromagnetic materials such as iron, nickel, cobalt, etc. or alloys thereof (SUS 430, etc.) are preferably usable.

In the present invention, the hub may use a metallic member having the exposed face s12 as mentioned above. However, as shown in Fig. 11 (a), the hub 67 may be entirely composed of a magnetic metal of a thin ring form, or may be such a hub comprising a cylindrical portion 767 extending inward in the center hole 77 and a flange portion 73 as shown in Fig. 11 (b), said hub being entirely composed of a magnetic metal.

As shown in Fig. 12 (a), there may be used a metallic member 701 capable of being attracted by a magnet member provided on a turn table, which has a center hole 651 fitted with the spindle of the driving device, and as shown in Fig. 12 (b), there may also be used a metallic member 701 capable of being attracted by the magnet member provided on the turn table of the driving device, which has the center hole 651 for the spindle of the driving device, said center hole 651 having a projected portion extending inward

inside the centering hole 651. It is desirable that an outer peripheral edge 702 of the metallic member 701 is embeded into the resin body 67b of the hub 67, and fastened to said resin body.

In the optical disk 61 of the present invention, it is desirable that an opening edge 100 of the center hole 77 of the hub 67 is chamfered (broken) as shown in Fig. 5 or 8.

The chamfered opening edge 100 includes the opening edges 100 extending in the form of an arc in the direction of opening end (in other words, being rounded off by radius: R type) as shown in Fig. 1, 2 or 10 (a), extending straight in the direction of opening end as shown in Fig. 10 (b-1), 6 or 7 and a bore diameter of said opening edge 100 is relatively <mall tapered type, for example, having chamfer of 45° or extending straight in the direction of opening end as shown in Fig. 10 (b-2) and a bore diameter of said opening edge 100 is relatively large tapered type. The opening edge 100, however, desirably is the chamfer of R type. In the present invention, in case that the opening edge of the center hole of the hub is chamfered, it becomes easy to apply the lubricant on the opening edge of the center hole or in the vicinity of said opening edge and the loading properties of the recording disks are improved since the layer of the lubricant is capable of keeping stability for a long time and the spindle is inserted smoothly.

In order to exhibit the effect obtained by the chamfer of the opening edge of the hub center hole at its maximum, in the chamfered edge of the R type, the radius thereof is preferably not more than 0.2 mm, more preferably, 0.02 to 0.2 mm, and in the tapered type, two sides crossing at right angles in a shaved sectional triangle individually has a length preferably of not more than 0.2 mm, more preferably of 0.02 to 0.2 mm.

## Preparation of hub

The hub 67 used in the optical disk of the present invention may easily be prepared by insert molding technique, wherein the metallic member 67a is placed in position within a mold and a resin is then injected into the mold to obtain the desired resin body 67b.

The hub 67 having a concave portion 81 in the outward end face s6 as shown in Fig. 1 or 2 may be prepared, for example, by a process wherein a resin hub body 67b having 1 or 2 or more concave portions 81 provided at equal interval in the vicinity of the circumference of the outward end face s6 is first prepared and then the metallic member 67a having 1 or two or more engaging members 82 is fitted in the concave portions 81 of the resin hub body 67a.

## Preparation of Optical Disk

The optical disk 61 shown in Fig. 1 is prepared by bonding the laminated disk substrate 63 to the hub 67, and bonding the hubs 67 to each other. The adhesive layer 83 is formed in a gap x between the central opening 65 of the disk substrate 63 and the column-like portion of the hub 67 fitted to this central opening 65, in a gap y between the circumferential portion of the central opening 65 and the flange portion 73 applied along this circumferential portion, and in a gap z between the inward end faces s7 of the hubs 67, and a groove 78 acts as a reservoir for the adhesive.

In the present invention, it is desirable to provide the groove 78 from the standpoint of adhesive force, but this groove 78 is not essential and, depending on circumstances the groove 78 may be omissible. In the present invention, it is desirable, from the standpoint of adhesion strength, to form the adhesive layer 83 at the three portions x, y and z. However, the adhesive layer 83 may be formed only at the portion y or may be formed at the portions x and y or y and z.

## Lubricant layer

In the present invention, for example, in the optical disk 61, a lubricant layer (not shown) is formed in the opening edge 100 of the center hole 77 into which the tip 521a of the spindle 93 is inserted or in the vicinity of said opening edge 100. In the present invention this lubricant layer may have varying thickness depending on the kind of the lubricant used, but usually has a thickness of 1 to 50,000 Å, preferably 5 to 20,000 Å, and especially 100 to 15,000 Å, and is formed by coating a lubricant, for example, silicone grease.

In the present invention, it is desirable to use such lubricants that they are transparent, non-volatile or sparingly volatile and excellent in chemical stability, though any known lubricants may be used. Such lubricants as mentioned above include, for example, silicone oil, silicone grease (for example, silicone oil incorporated with viscosity increasing agents (thickeners) such as metallic soap, etc., and various additives such as oiliness improvers, antioxidants, etc.), silicone oil compound (a product obtained by mixing silicone

oil with, for example, finely divided silicon oxide powders etc. and, if necessary, various additives), fatty acid esters, fluorocarbon, polyester type lubricants containing fatty acid, petroleum waxes, mineral oil waxes, metallic soap grease, Teflon type lubricants, etc. Of these lubricants exemplified above, preferred are silicone grease or silicone oil compounds.

The silicone grease used herein includes, for example, silicone grease series G 30, G 31, G 40, G 41, G 420, G 501, FG 720, G 330, G 340 and G 630 produced and sold by Shin-etsu Silicone K.K., and silicone grease SH 33, SH 41, SH 44, SH 45 and SG 3451 produced and sold by Toray Dow Corning Silicone K.K.

The silicone oil compounds used herein include, for example, HIVAC-G produced and sold by Shin-etsu Silicone K.K. and HVG produced and sold by Toray Dow Corning Silicone K.K.

The lubricant layer mentioned above may be formed in position, for example, in an optical disk laid in an optical disk cartridge as shown in Fig. 8, by first opening an open-close shutter 513 of the cartridge case 510 and then fixing it with a clip, and then a given amount of the lubricant such as silicone grease is applied to the opening edge 100 of the central opening of the hub or in the vicinity of said opening edge, for example, by using applicator having a end portion applied with the lubricant.

In that case, an excess lubricant such as silicone grease attached to the opening edge 100, it is desirable to wipe out said lubricant with a clean applicator. Further, when silicone grease is attached to portions other than the opening edge 100 or the vicinity thereof, it is also desirable to wipe out said silicone grease with a new applicator. The applicator once used is desirably discarded. Through the wiping operation as mentioned above, it is possible to inhibit effectively the contamination of the optical disk with the lubricant and the occurrence of errors in the recording and reproducing operation of information.

In the embodiment of the optical disk of the invention, the lubricant layer is formed in the opening edge 100 for the spindle 93 or in the vicinity thereof, hence the sliding or slip characteristics between the spindle 93 and the center hole 77 of the hub 67 can be improved.

The optical disk 61 of the invention, as illustrated hereinbefore, has the lubricant layer provided on the surface (tapered portion) of the central opening 89 into which the spindle 93 is inserted.

In the optical disk as shown in Fig. 1 or 2, the metallic member 67a (or s12) is embedded in the column-like portion 71 constituting the hub 67, and other portions of the column-like portion (that is, opening circumferential portions s9 and s11 and inner peripheral portion s8 of the center hole 77) are formed from resin. In the optical disk as mentioned above, the spindle 93 is inserted into the center hole provided the lubricant layer on the surface of the central opening 89 and having excellent slip characteristics, hence the loading and unloading operation becomes smooth and no poor loading performance occurs.

Accordingly, this optical disk 61 is optimum when used in the automatic loading and unloading operation of the disk on and off the disk drive (driving device) for several ten-thousands to several hundred thousands times by virtue of an autochanger.

## Use of optical disk

The optical disk 61 of the invention is used by holding and setting said disk on the driving device 91 as shown in Fig. 5, while inserting the spindle 93 of the driving device 91 into the center hole 77 and attracting the metallic member 67a to a magnet 95 of the driving device 91.

Further, the optical disk 61 of one embodiment of the invention mentioned above may be used as an optical disk cartridge by holding said disk rotatably within a cartridge case 510 of a thin hollow case shape as shown in Fig. 8 or 9.

The cartridge case 510 in which the optical disk is received is prepared, for example, by laminating together a pair of case forming member 510a and 510b made from a synthetic resin so that a hollow portion 511 is formed. In this cartridge case 510, an open window 512 through which a part of the optical disk substrate is exposed externally on both sides of said cartridge case 510. The cartridge case 510 mentioned above is provided with an open-close shutter 513 for the open window 512 fitted to said open window 512 so as to be slidable reciprocatively in the direction of an arrow shown in Fig. 9.

Further, in the cartridge case 510, an opening 514 is formed through which a turn table 96 of the disk driving device is inserted, and along the circumference of this opening 514 an inner peripheral rib 515 is formed in an inner surface of the cartridge case 510 opposite to the optical disk. This inner peripheral rib 515 is intended to inhibit "looseness" of the optical disk by narrowing relatively the space between the inner peripheral rib 515 and the optical disk.

The optical disk received in this disk cartridge 510 is rotated by fitting it to the optical disk driving device having the turn table 96. This turn table 96 has an annular holding portion 523 formed so as to embrace the hub 67 and the spindle 93 projecting from the center of the turn table, tapering off to the tip portion 521a and going to be inserted into the center hole 77 of the hub 67.

In the turn table 96, a magnet 524 is provided in order to attract the metallic plate s12 of the hub 67 in a state where the hub 67 is embraced by the annular holding portion 523 and the spindle 93 is inserted into the center hole 77, and the hub 67 is fixed on the turn table 96 by means of this magnet and this annular holding portion. When the turn table 96 is set to rotate, the optical disk rotates and the disk substrate 63 exposed through the open window 512 is irradiated with a laser beam, whereby information is recorded or reproduced in and from the optical disk.

In order to demonstrate the effect of the present invention, the present inventor conducted 20,000 times an experiment of loading the optical disk of the invention on the upright drive, whereupon no spin-up trouble occurred.

The upright drive referred to above has a disk cartridge loading aperture formed perpendicular to the ground, and the disk cartridge is inserted longitudinally into said loading aperture.

Further, the present inventor prepared the optical disk which was applied silicone grease (silicone oil compound HVG produced and sold by Toray Dow Corning Silicone K.K.) by the above-mentioned procedure to a thickness of 1 $\mu$m on the opening edge (tapered portion) 100 of each center hole of 10 optical disks (both sides make 20 faces) of Fig. 1, each of which was received in the cartridge case 510 as shown in Fig. 8, and put the optical disks thus treated were individually put to "upright loading test" 50 times per one side (both sides make 100 times), whereupon the spindle got accurately and quickly into the center hole 77 of the hub 67 in every case, the turn table of the upright drive attracted surely the hub 67 and the optical disk was set to spin up (the optical disk which is at a standstill suddenly initiates to rotate by interlocking with rotation of the turn table), whereupon no poor loading performance occurred.

In the "upright loading test" mentioned above, Sony Drive SMO-S 501 produced and sold by Sony Corporation was used as a driving device.

The present inventor conducted 25,000 times an experiment (load/unload test) to load the optical disk (see Fig. 1) on an upright drive (SMO-S 501 produced and sold by Sony Corporation), whereby no trouble occurred.

In conducting the above experiment, the load/unload test was carried out automatically using a robot (RV-CMI produced and sold by Mitsubishi Elect. Corp.).

The load/unload test referred to above is intended to mean a repetition of such loading operation as mentioned below, wherein a robot was used.

That is, the robot is allowed to insert into the upright drive the optical disk which is completely taken off from the drive, whereby the thus inserted optical disk is fitted automatically to said drive. The upright drive is then set to initiate the spin-up of the thus fitted optical disk, whereby the upright drive is brought to "READY STATE" wherein the recording and reproducing operation becomes possible, and "BUSSY LAMP" provided in said upright drive to instruct a quick rotation of the optical disk goes off. After the lamp went off, the robot is allowed to press "EJECT BUTTON" for instructing to take out the optical disk therefrom, thereupon the optical disk is ejected therefrom to appear partly. The robot is then allowed to draw out completely the partly appeared optical disk from the upright drive, whereby the test terminates one time. By "load/unload test" is meant that such a test as mentioned above is carried out repeatedly. The drive was set to sound the alarm when the drive is not brought to the "READY STATE" 15 seconds after the optical disk was inserted into the drive. The tact time for the test of one time was 22 seconds.

Such a load/unload test as mentioned above was conducted 25,000 times, whereupon no trouble such as poor loading performance occurred at all. No trouble was observed in the hub portion when the hub portion was inspected visually in the middle of the load/unload test, that is, 100 times, 200 times, 500 times, 2300 times, 5000 times, 12000 times, 14700 times and 20600 times after initiation of said test.

The optical disk of the present invention provided at predetermined portions with a lubricant layer comprising silicone grease (called also a silicone grease layer) was allowed to stand at 80°C/dry for 6000 hours, and the optical disk thus treated was then put to the load/unload test 25000 times, whereupon no trouble such as poor loading performance occurred at all in the same manner as mentioned above. The hub portion was visually inspected in the middle of the load/unload test in the same way as above, whereupon no trouble was observed.

Further, the optical disk provided at the predetermined portions with the silicone grease layer was allowed to stand at 80°C/RH 85% for 300 hours, and then put to the load/unload test in the same way as above, whereupon no stress crack of the hub of the optical disk occurred and no such poor loading performance as the optical disk runs idle to make noise or the inner peripheral surface of the hub is shaved was observed.

It is needless to say that the present invention is in no way limited to the examples mentioned above and it will be understood that variations and modifications can be effected within the spirit and scope of the invention. For example, various lubricants other than those used in the foregoing examples may be used,

and the opening edge of the center hole of the hub may not have a chamfer, though it desirably has a chamfer (is desirably chamfered). The form of chamfered edge and the shape of the hub are not limited to those mentioned in the foregoing examples and may be formed into various shapes.

The optical disks and hubs for optical disk illustrated hereinbefore are of the "laminated type" (see Figs. 1 and 2) The optical disks of the "single plate type" and the hubs for the same are illustrated hereinbelow.

The optical disk 21 shown in Fig. 13 is an optical disk of the single plate type and has a disk substrate 23a and a hub 27 which is inserted into a central opening 25 of the disk substrate 23a.

The disk substrate 23a and a recording material layer to be formed thereon are the same as in the optical disks of the laminated type.

The central opening 25 of the disk substrate 23a is fitted with the hub 27. In the same manner as in the hub 67 in the optical disk of Fig. 1, the hub 27 has a cylindrical portion 31, and a resin body 27 comprising a flange portion 33 extending outward from one end of said cylindrical portion 31 and a bottom portion 35 blockading the other end of said cylindrical portion 31. In the bottom portion 35 is formed a center hole 37 into which a spindle of a driving device is inserted, and a cylindrical boss portion 38 surrounding the center hole 37 is formed.

On the outer surface of the bottom portion 35 of this resin body 27b is embedded an annular metallic member 27a, and this metallic member is arranged so that the center hole 37 is located within a central opening 39 of said metallic member. The central opening 39 of the metallic member 27a has a radius larger than that of the center hole 37 of the resin body 27b, and the inner edge of the opening 39 is apart from inner peripheral portion s1 with a given distance. In the bottom portion 35 of the resin body 27b, the boss portion 38 is a part of the bottom portion 35, and accordingly circumferential edge portions s2, s3 and an interperipheral portion s1 of the center hole 37 are all made of resin. The metallic member 27 has an exposed portion 55 between the circumferential edge portion s2 of the center hole and an outer peripheral edge portion s4 on the outer surface of the bottom portion 35.

Materials used for the resin body 27b and metallic member 27a are the same as those mentioned above.

The hub 27 and optical disk 21 are prepared in the same manner as above.

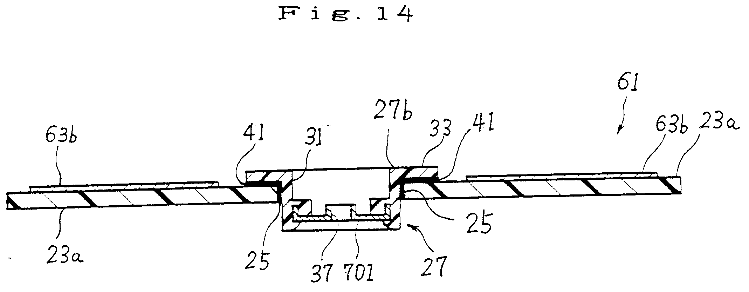

Further, as shown in Fig. 14, the optical disk 61 of the present invention may have a hub 27 consisting of a resin body 27b and a metallic member 701 capable of being attracted by the magnet member provided on the turn table of the driving device, which has the center hole 37 for the spindle of the driving device, said center hole 36 having a projected portion extending inward the cylindrical portion 31 of the resin body 27b. It is desirable that an outer peripheral edge of the metallic member 701 is embeded into the resin body 27b of the hub 27, and fastened to said resin body.

An opening edge 100 of the single plate type optical disk 21 into which the spindle 93 is inserted has desirably a chamfer (is desirably chamfered) in the same manner as in the laminated type optical disk 61 mentioned before, and a lubricant layer (not shown) is formed in the chamfered opening edge 100 in the same manner as above.

## EFFECT OF THE INVENTION

As stated hereinbefore, in the present invention the lubricant layer is formed by coating a lubricant on the opening edge of the center hole of the hub or in the vicinity thereof, hence sliding properties or slip characteristics between the spindle and the opening edge of the hub can be improved, and the optical disk can be smoothly loaded on the disk drive to effect recording and reproducing information in and from the optical disk smoothly.

## Claims

1. A hub for optical disk, said hub having a center hole into which a spindle of an optical disk driving device is inserted, wherein a lubricant layer is provided in an opening edge of the center hole of the hub or in the vicinity of said opening edge.

2. The hub for optical disk as claimed in claim 1 wherein the lubricant layer is formed from a lubricant selected from among silicone oil, silicone grease or silicone oil compound.

3. The hub for optical disk as claimed in claim 1 or 2 wherein the lubricant layer has a thickness of 1 to 50,000 Å.

4. The hub for optical disk as claimed in any of claims 1 to 3 wherein the opening edge of the center hole of said hub is chamfered.

5. An optical disk provided with a hub having a center hole into which a spindle of an optical disk driving device is inserted, wherein a lubricant layer is provided in an opening edge of the center hole of the hub or in the vicinity of said opening edge.

6. The optical disk as claimed in claim 5 wherein the lubricant layer is formed from a lubricant selected from among silicone oil, silicone grease or silicone oil compound.

7. The optical disk as claimed in claim 5 or 6 wherein the lubricant layer has a thickness of 1 to 50,000 Å.

8. The optical disk as claimed in any of claims 5 to 7 wherein the opening edge of the center hole of said hub is chamfered.

9. The hub as claimed in any one of claims 1 to 4, wherein said hub comprises a metallic member capable of being attracted by a magnet member provided on a turn table of a driving device and a resin body having a center hole for inserting a spindle of the driving device, and an inner peripheral portion and the opening edge of the center hole is made of resin.

10. The optical disk as claimed in any one of claims 5 to 8, wherein said hub comprises a metallic member capable of being attracted by a magnetic member provided on turn table of a driving device and a resin body having a center hole for inserting a spindle of the driving device, and an inner peripheral portion and the opening edge of the center hole is made of resin.

Fig. 1

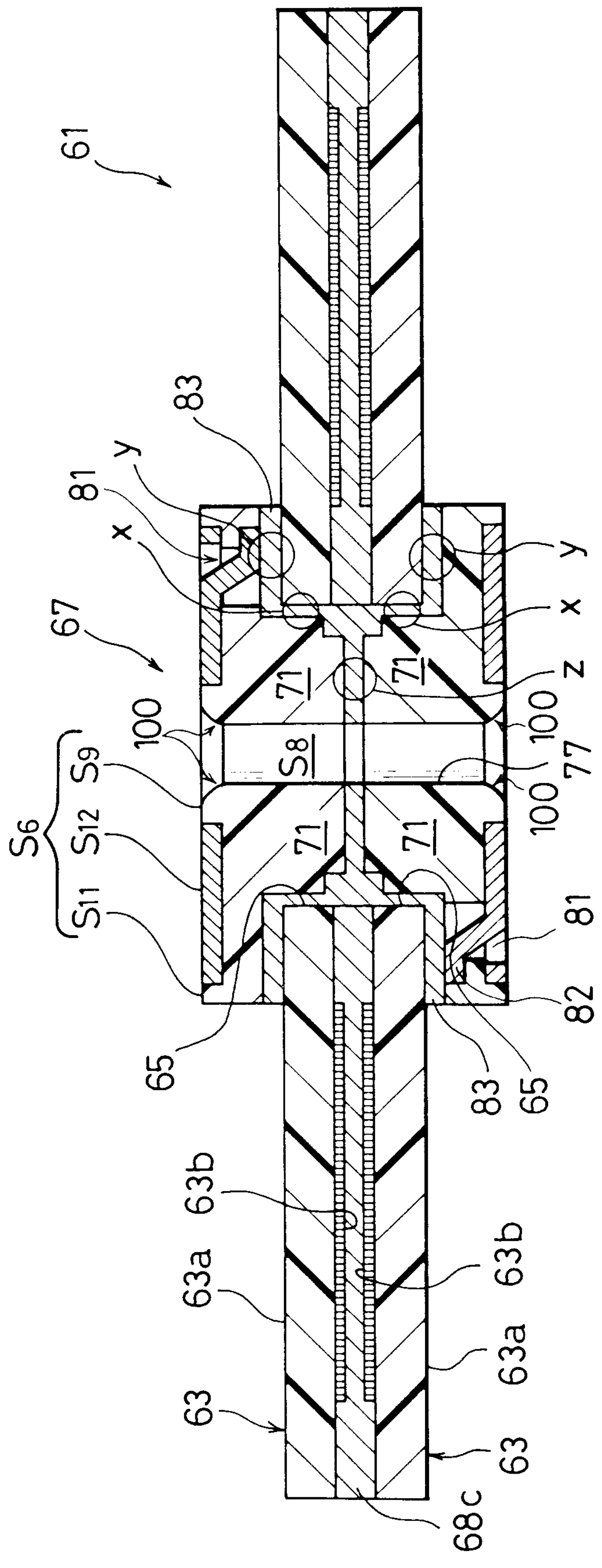

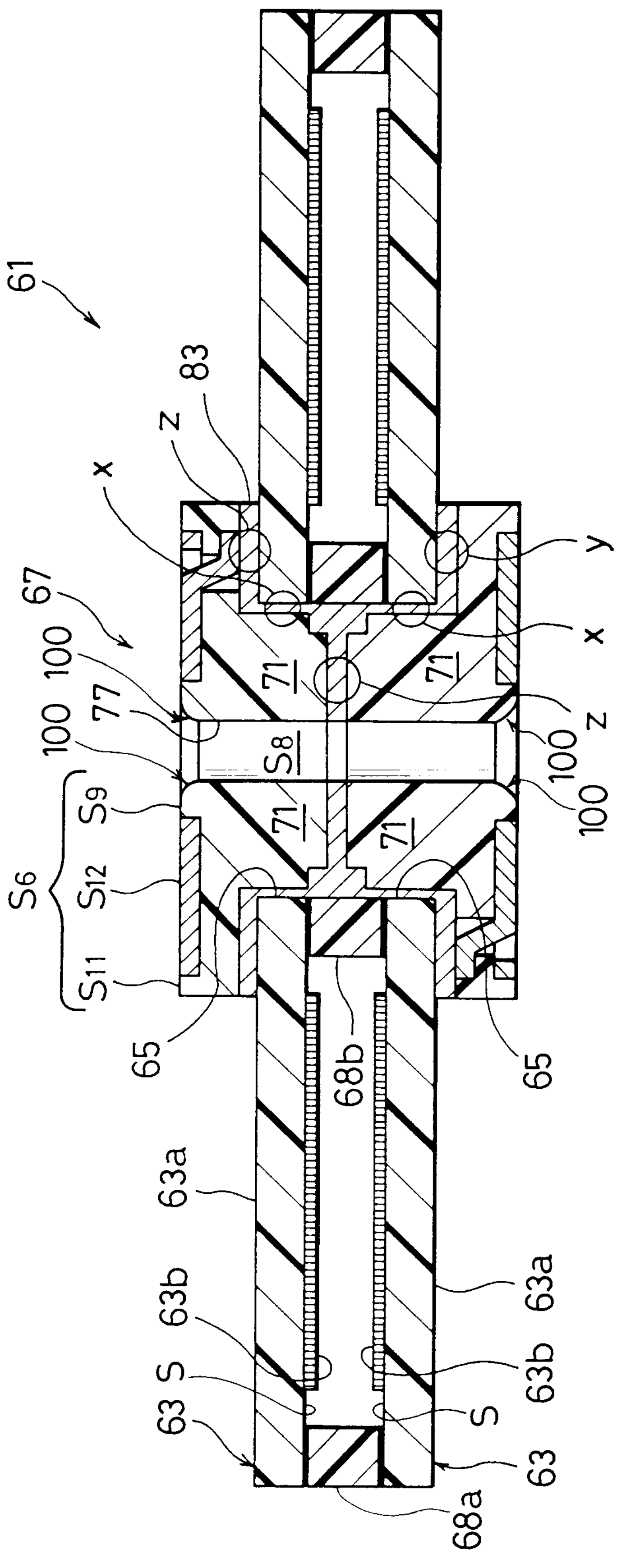


Fig. 2

Fig. 3

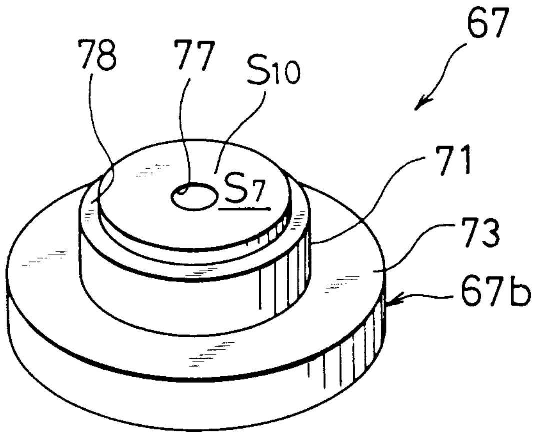
67
78
77
S10
S7
71
73
67b

Fig. 4

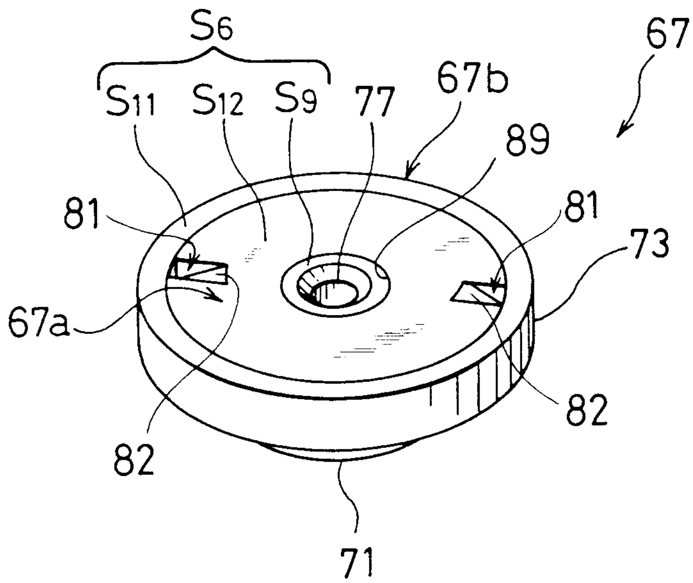
S6
S11
S12
S9
77
67b
67
89
81
81
73
67a
82
82
71

Fig. 5

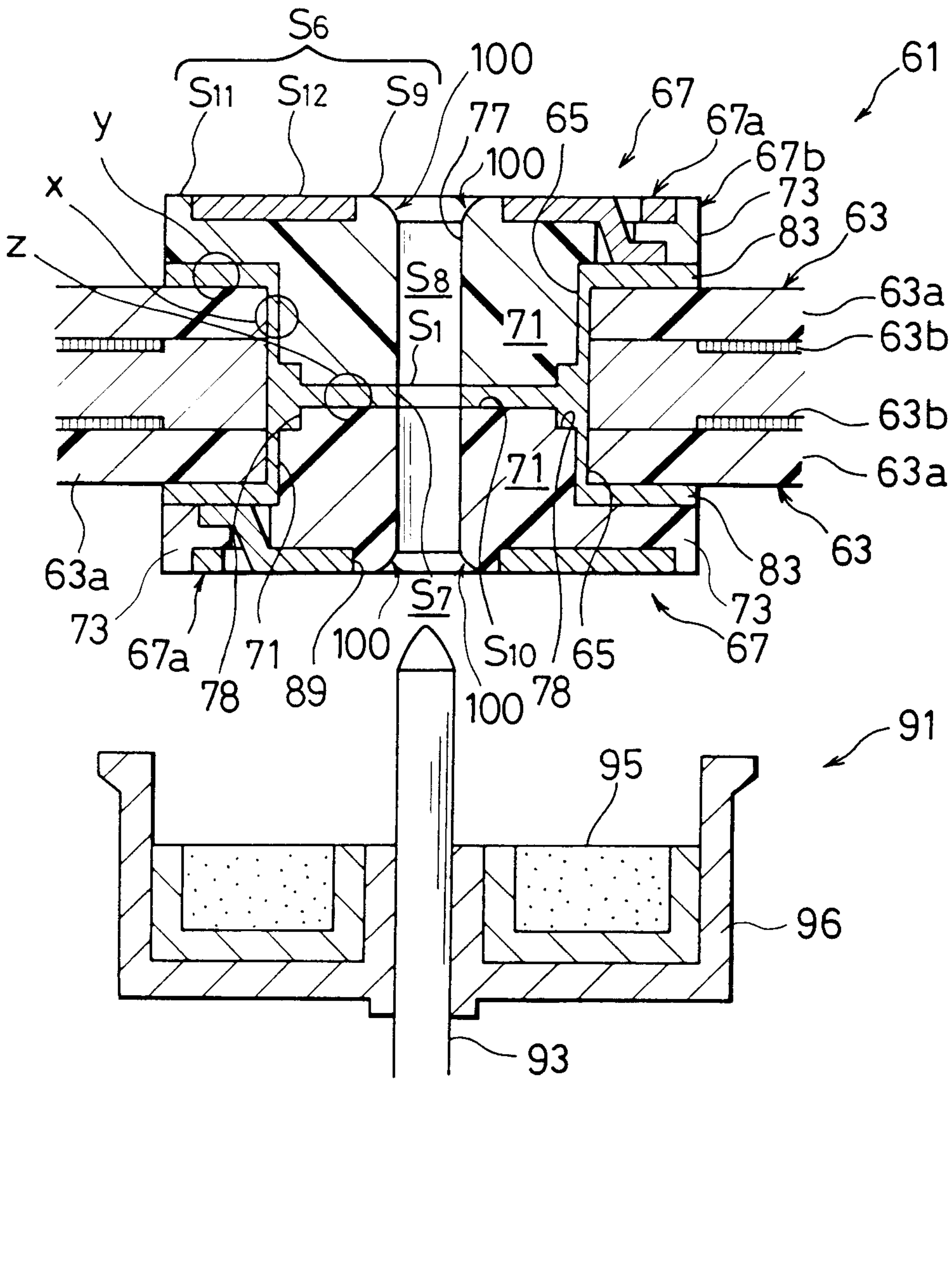
S6
S11
S12
S9
100
77
65
67
67a
67b
61
y
x
z
100
73
83
63
63a
63b
S8
S1
71
63b
63a
63
63a
73
67a
78
71
89
100
S7
S10
100
78
65
83
73
67
91
95
96
93

Fig. 6

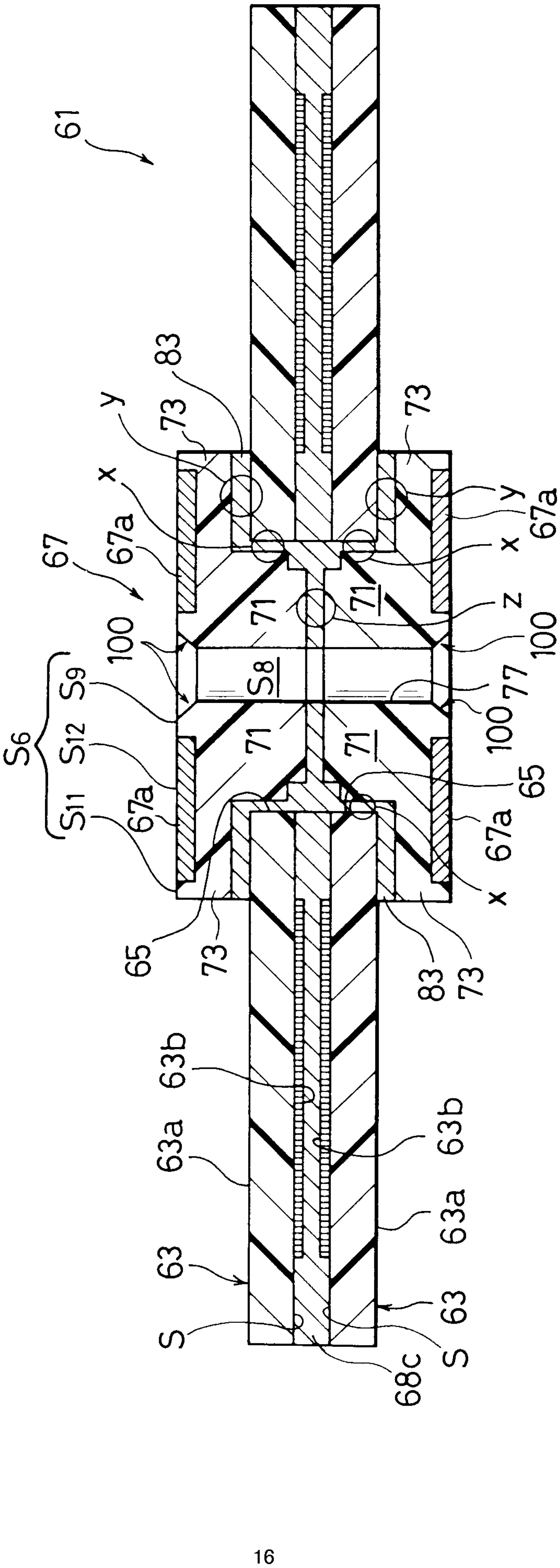

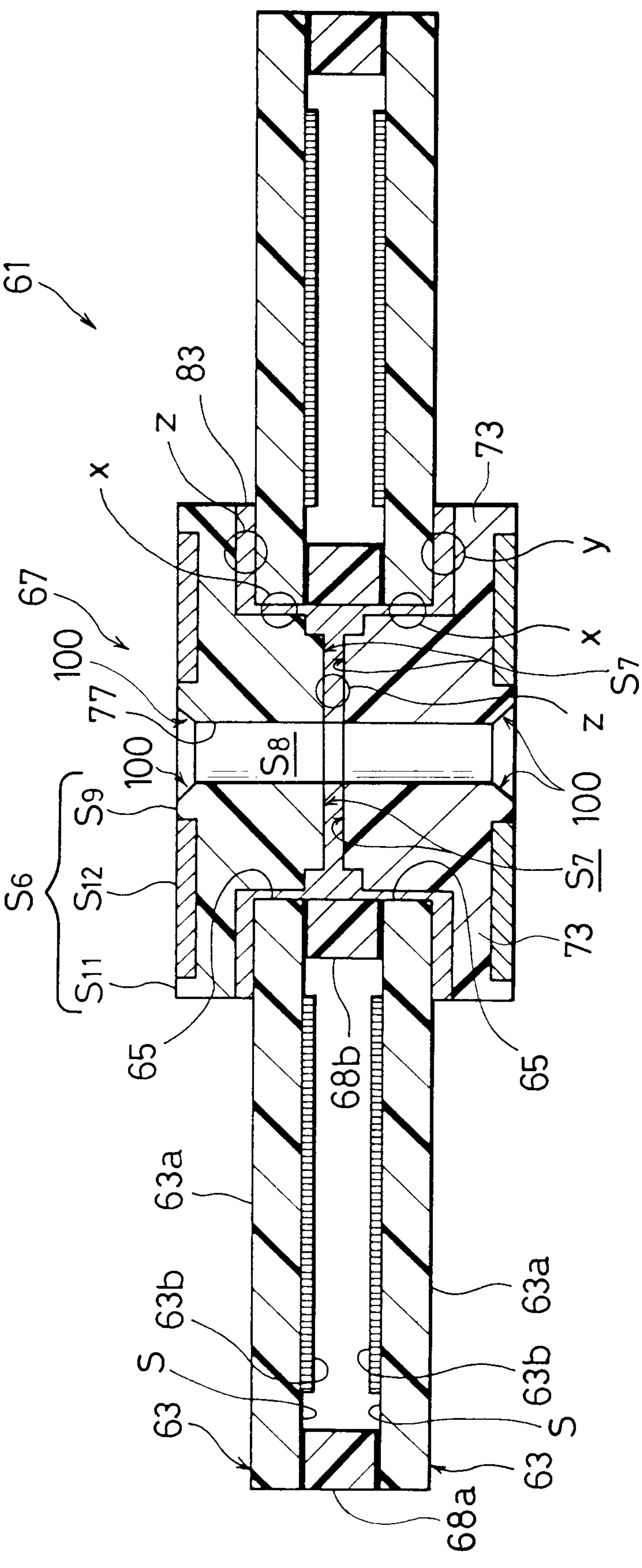
61
83
z
x
73
y
67
x
S7
100
77
z
S8
100
100
S9
S7
S6
S12
73
S11
65
68b
65
63a
63a
63b
S
63b
S
63
63
68a

Fig. 7

Fig. 8

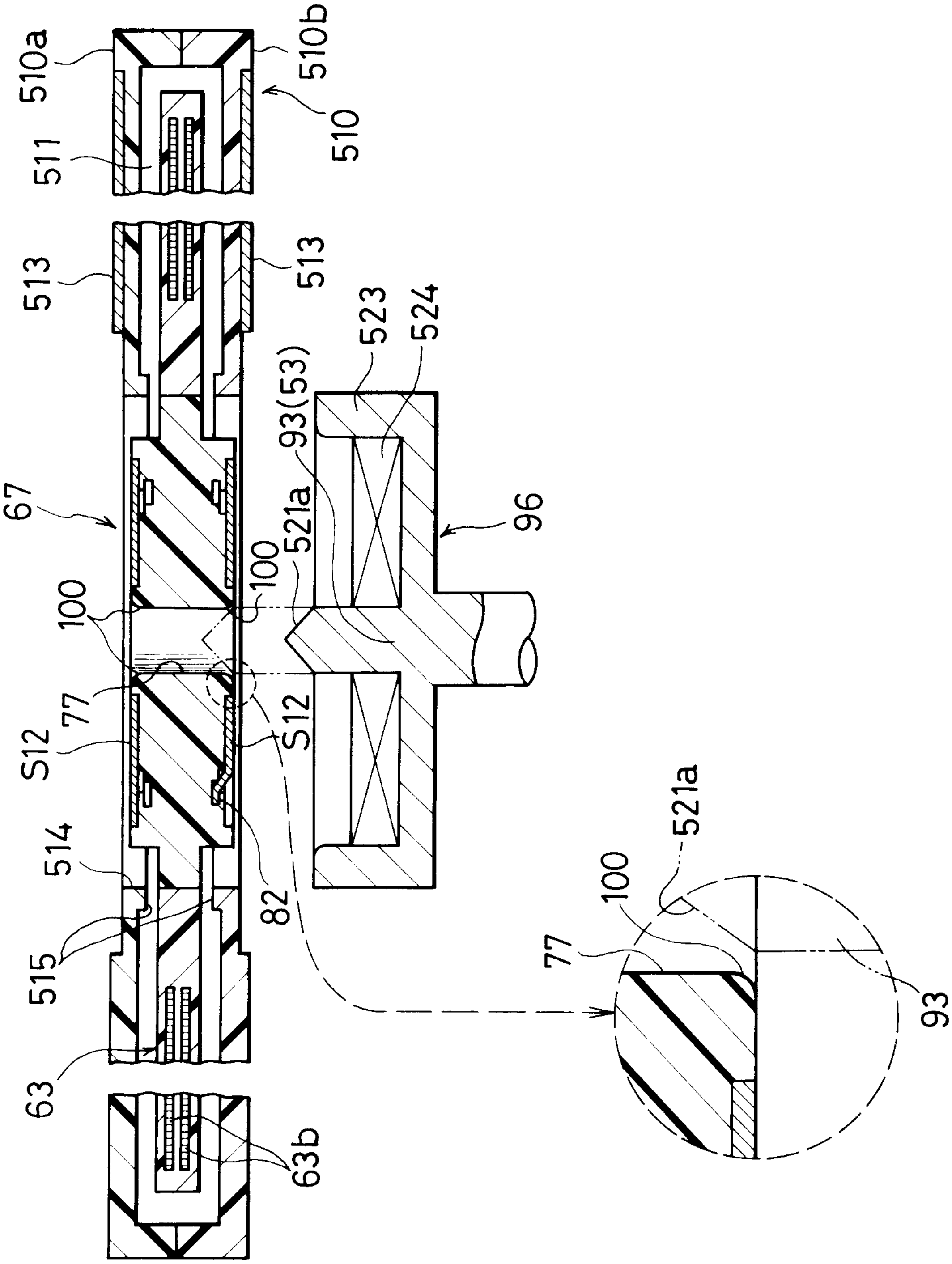
510a
510b
510
511
513
513
67
523
524
93(53)
521a
100
100
96
77
512
512
514
515
82
63
63b
521a
100
77
93

Fig. 9

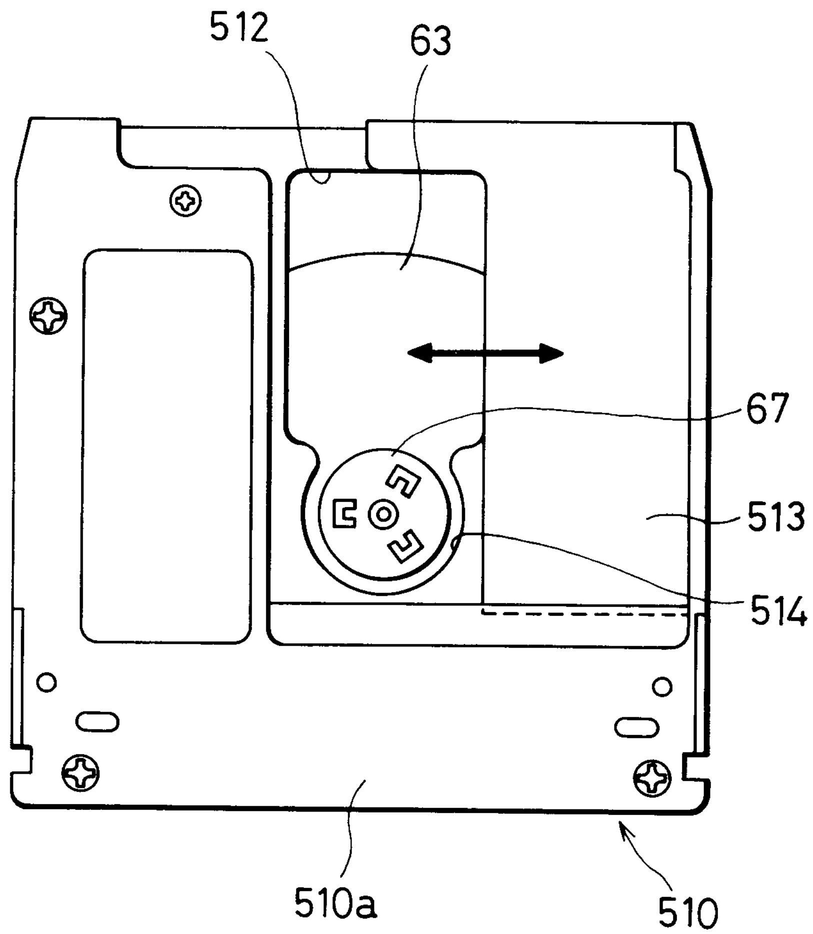

Fig. 10(a)

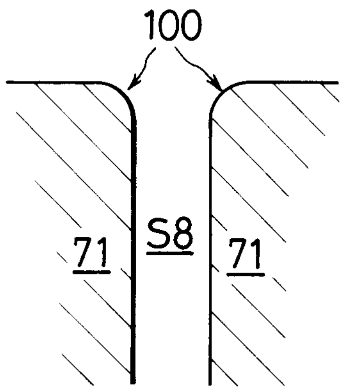


Fig. 10(b-1)

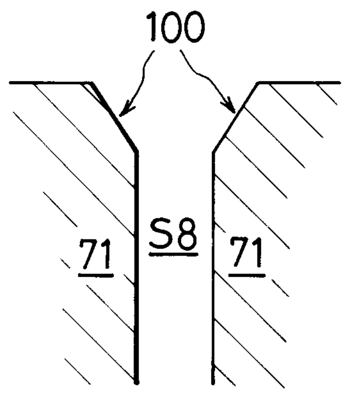


Fig. 10(b-2)

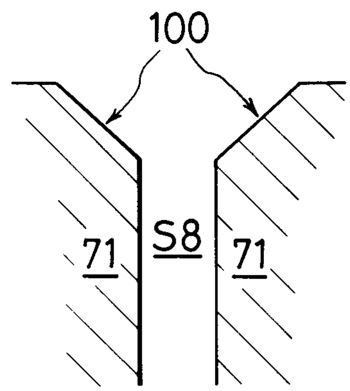


Fig. 11(a)

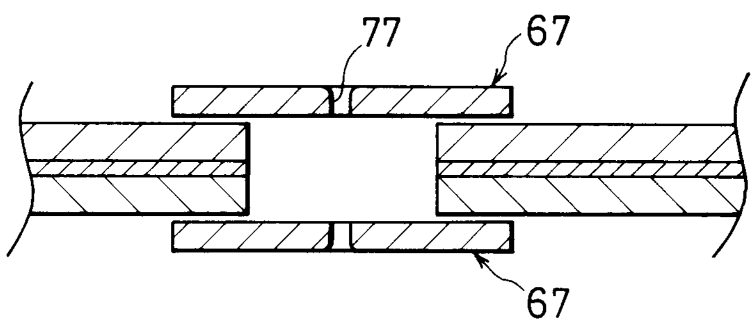


Fig. 11(b)

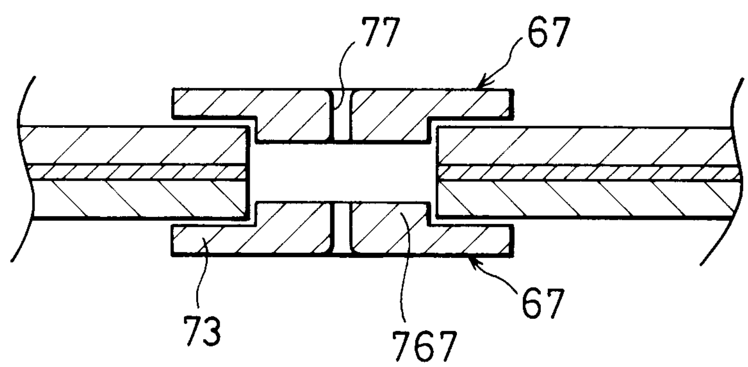

Fig. 12(a)

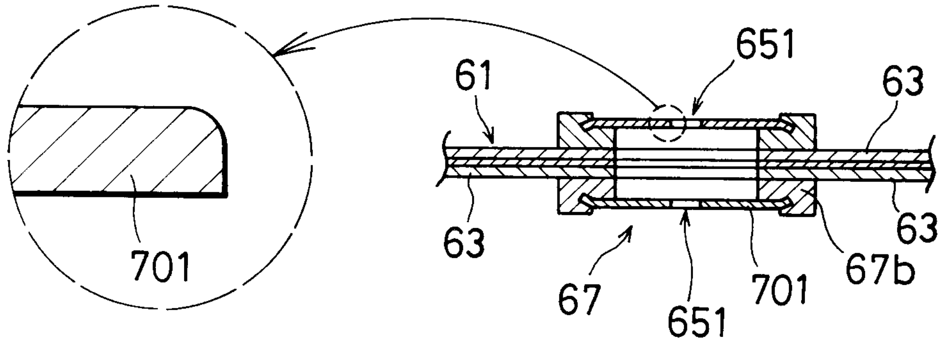


Fig. 12(b)

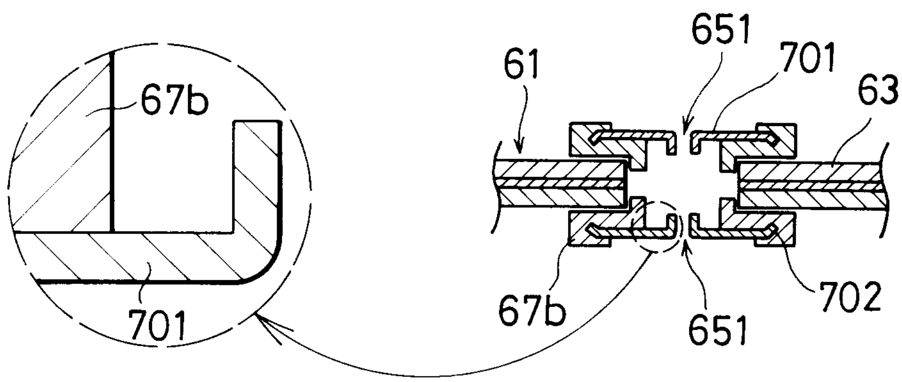

Fig. 13

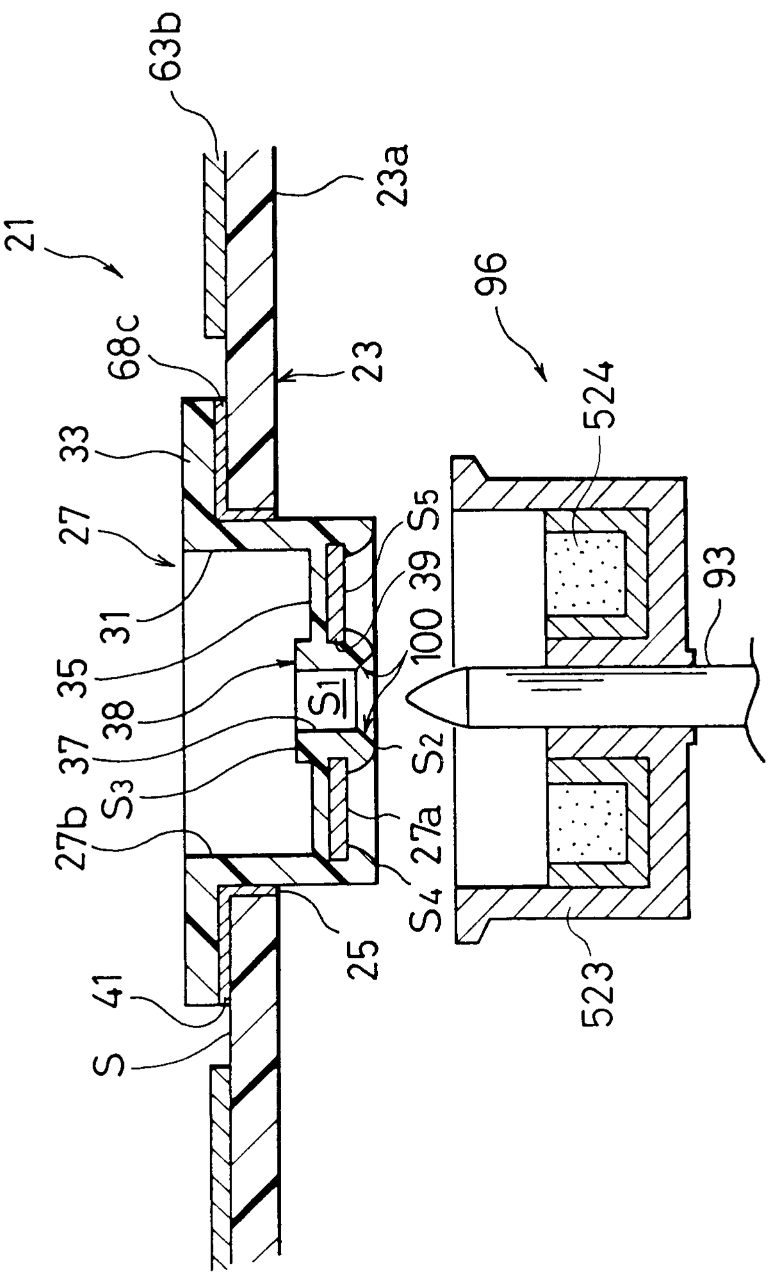
21
23
23a
63b
68c
33
27
31
35
38
37
$S_3$
27b
S
41
25
$S_4$
27a
$S_2$
$S_1$
100
39
$S_5$
96
524
93
523

Fig. 14